# EUROPEAN PATENT APPLICATION

(11) **EP 3 800 225 A1**
(43) Date of publication of application: **07.04.2021**
(21) Application number: 19216233.7
(22) Date of filing: 13.12.2019
(51) Int. Cl.: C09D 5/08, C09D 7/62, C08K 9/06

(54) **CORROSION RESISTANT HYDROPHOBIC SURFACES**

(30) Priority: 03.10.2019 US 201916592417
(71) Applicant: Hamilton Sundstrand Corporation, Charlotte, NC 28217-4578 (US)
(72) Inventor: POTEET, Steven, Ashland, MA 01721 (US); SMITH, Blair, South Windsor, CT Connecticut 06074 (US); PUJAR, Vijay V., San Diego, CA California 92127 (US)
(74) Representative: Dehns

(57) **Abstract**

An additive for reducing corrosion and increasing hydrophobicity having oxidized graphene nanoplatelets; and a pendant group represented by the following formula:

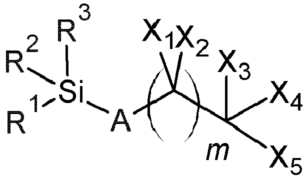

R¹, R², and R³ are selected from a group consisting of alcohols, ethers, halogens, and amines. A is an unsubstituted chain of at least 1 and no more than 4 atoms wherein at least one atom is carbon. m is an integer from 1 to 12, X₁ and X₂ are selected from a group consisting of hydrogen, halogens, and alkyls of 1 to 5 carbon atoms. X₃, X₄, and X₅ are selected from a group consisting of hydrogen and halogens, and at least one of X₃, X₄, and X₅ is fluorine. At least one of R¹, R², and R³ is covalently bonded to one of the graphene nanoplatelets.

## Description

### BACKGROUND

The present disclosure relates to anticorrosion coatings for aluminum alloys, and more particularly aircraft heat exchangers, nacelle and wing leading edge components.

Aluminum alloys used in aeronautics and aerospace applications are subjected to environments that cause corrosion, resulting in a need to protect them with anticorrosion coatings. Historically, anticorrosion coatings have included hexavalent chromium (Cr⁶⁺) and other substances that are now banned in many countries. As a result, a need for new anticorrosion coatings has arisen. Recent developments include the addition of graphene nano platelets (hereto referred as GNPs in the form of graphene, graphene oxide, or reduced graphene oxide) to existing anticorrosion primers. The resulting coatings have significantly increased anticorrosion properties relative to the primer alone. There is, however, a desire to further improve the anticorrosion properties of the coatings and improve performance overall.

### SUMMARY

Described herein is an additive for reducing corrosion and increasing hydrophobicity. The additive has oxidized graphene nanoplatelets and a pendant group represented by the following formula: 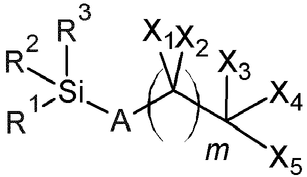 R¹, R², and R³ are selected from a group consisting of alcohols, ethers, halogens, and amines. A is an unsubstituted chain of at least 1 and no more than 4 atoms and at least one atom is carbon. M is an integer from 1 to 12. X₁ and X₂ are selected from a group consisting of hydrogen, halogens, and alkyls of 1 to 5 carbon atoms. X₃, X₄, and X₅ are selected from a group consisting of hydrogen and halogens, and at least one of X₃, X₄, and X₅ is fluorine. At least one of R¹, R², and R³ is covalently bonded to one of the graphene nanoplatelets.

The additive can be dispersed in a primer and then used to coat substrates.

Also described herein is a method for forming the additive. Graphene nanoplatelets are oxidized and then mixed with a pendant group. The mixture is heated from 1 to 24 hours. The pendant group represented by the following formula: 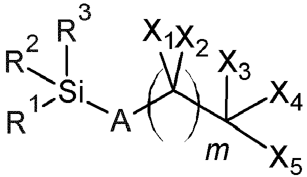 R¹, R², and R³ are selected from a group consisting of alcohols, ethers, halogens, and amines. A is an unsubstituted chain of at least 1 and no more than 4 atoms and at least one atom is carbon. M is an integer from 1 to 12. X₁ and X₂ are selected from a group consisting of hydrogen, halogens, and alkyls of 1 to 5 carbon atoms. X₃, X₄, and X₅ are selected from a group consisting of hydrogen and halogens, and at least one of X₃, X₄, and X₅ is fluorine. At least one of R¹, R², and R³ is covalently bonded to one of the graphene nanoplatelets.

### BRIEF DESCRIPTION OF THE DRAWINGS

FIG. 1 is a structural formula of a representative graphene nanoplatelet with a perfluoro alkoxysilane pendant group.
FIG. 2 is a structural formula of a representative pendant group.
FIG. 3 is a reaction schematic for making a representative silane-graphene nanoplatelet.
FIG. 4 is a cross section of a heat exchanger with a representative coating.

### DETAILED DESCRIPTION

Aluminum alloys in the aeronautical and aerospace industries are subjected to environments that cause corrosion, which is accelerated with increased water contact time. Unfortunately, current anticorrosion coating solutions are partially hydrophilic, and therefore promote water adhesion to the surface, increase the risk for blocked airflow, and accelerate corrosion by increasing the contact time for electrolytes, a liquid medium, and a substrate. The addition of GNPs to commercially available primers has resulted in beneficial anticorrosion performance for aluminum, but has not addressed the issues of hydrophilicity.

Hydrophilicity and hydrophobicity can be described in terms of water contact angles. A water contact angle is the angle measured through the liquid where the surface of a droplet meets a solid surface. Typically, water contact angles are measured goniometry, for example using ASTM International standard D7334-08 (R2013) or ASTM International standard C813-90 (R2014). A droplet is placed on a solid surface and the image of the drop is recorded. The static contact angle is then measured from the image by fitting the Young-Laplace equation, a circle, or a polynomial around the droplet. Water contact angles of less than 90° indicate that the surface is hydrophilic. Water contact angles of greater than 90° indicate that the surface is hydrophobic.

As described herein, GNPs can be further functionalized on the surface due to the presence of hydroxyl, carboxy, and ketone units. The GNPs can, in particular, be functionalized with long and/or short-chain perfluoro alkoxysilanes, for example 1H, 1H, 2H, 2H-perfluorooctyltriethoxysilane. GNPs with perfluoro alkoxysilane pendant groups can then be distributed into a suitable polymeric host, such as epoxies, urethanes, polyimides, polyamides, polyvinyls, or silicones. The water contact angle of the resulting coating is greater than 90 degrees. As water contact angles of greater than 90 degrees are considered hydrophobic, increasing the water contact angle to greater than 90 degrees creates a hydrophobic anticorrosion coating. As a result, there is a decreased water contact time and a lower rate of corrosion with the addition of silane or perfluoro silane functionalized GNPs to the commercially available primer and commercially available primers that include GNPs that are not perfluoro silane functionalized.

The coating can then be used to coat any substrate or part that would corrode over time, for example aluminum alloys and heat exchangers, air cycle machines, ductwork, air conditioning systems, electronic boxes, heat sinks, and automobile parts. The coating also can be used in any system for any part that comes in contact with a fluid or gas. Heat exchangers in particular benefit from hydrophobic coatings as heat exchangers have a series of tubular lattices for fluid flow that can easily become blocked with water or ice. Hydrophobic anticorrosion coatings, like those described herein, therefore, have the additional benefit of helping to keep passageways clear of water and ice, resulting in more efficient passageways for airflow. Similarly, the coatings may be used in any system for any part subject to icing or fluid entrapment.

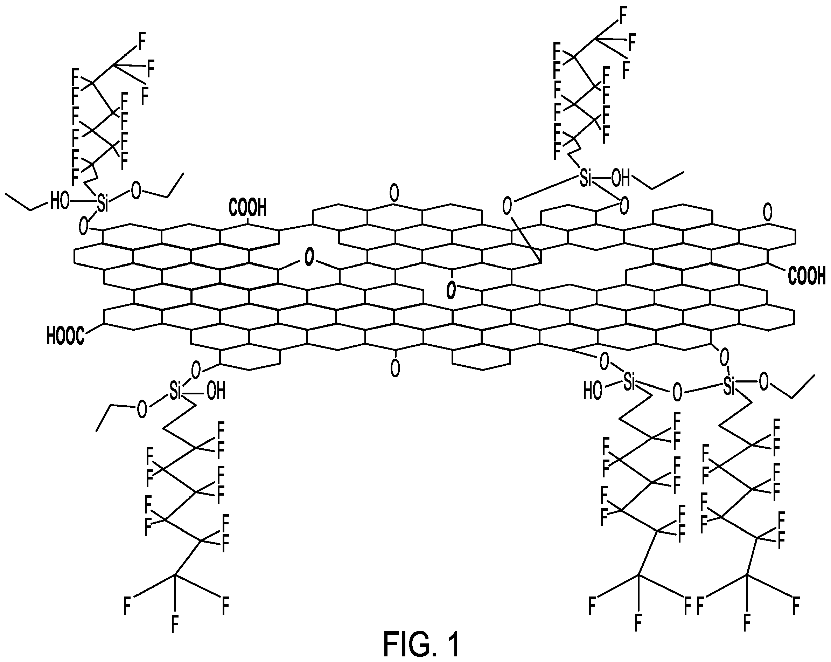

FIG. 1 is a structural formula of a representative GNP with a perfluoro alkoxysilane pendant group. Graphene is a single layer of carbon atoms in a two dimensional hexagonal lattice in which one atom forms each vertex. GNPs are segments of graphene that have a stack thickness in the range of at least 5 nm to no more than 10 nm, in other embodiments in a range of at least 6 nm to no more than 8 nm, or at least 6.75 nm to no more than 7.5 nm. They can have a width in the range of at least 0.5 microns to no more than 50 microns, at least 1 microns to no more than 25 microns, or at least 5 microns to no more than 10 microns. GNPs can be partially oxidized to contain carbons which have been surface modified by oxygen to form ketones, carboxy groups, hydroxyl groups, or other functional groups on the surface. The locations of these substitutions are functional sites. In some embodiments GNPs can have at least 1-25%, at least 5-20%, or at least 10-15% functional groups with a balance of unfunctionalized carbon, for example..

Pendant groups are groups of molecules or atoms attached to the GNP. Silane pendant groups are pendant groups which contain silicon covalently bonded to four atoms. Pendant groups can be selected in order to alter the properties of the GNPs. In some embodiments, pendant groups can be perfluorosilanes. The carbon chain length A may be considered short (less than 4 carbons) or long (> 4 carbons but no more than 12 carbon atoms) such as 1H, 1H, 2H, 2H-perfluorooctyltriethoxysilane.

Pendant groups are attached to the GNPs through covalent bonds at functional sites. If a GNP has more than one pendant group, each pendant group can be the same or different. Pendant groups can be present in a functionalized GNP in a ratio in a range of at least 5:1 and no greater than 10:1 GNP, at least 6:1 and no greater than 9:1, or at least 7:1 and no greater than 8:1 pendant group by weight. of the functional groups. Silane functionalized GNPs provide the anticorrosion benefits of GNP alone or in combinations with other anticorrosion inhibitors, such as Al³⁺, Mn²⁺, Mg²⁺, Cr³⁺, MoO₄⁻, silicates, Pr³⁺, Ce³⁺, Y³⁺, La³⁺, Zr²⁺, and Zn²⁺, as well as the added benefit of being hydrophobic.

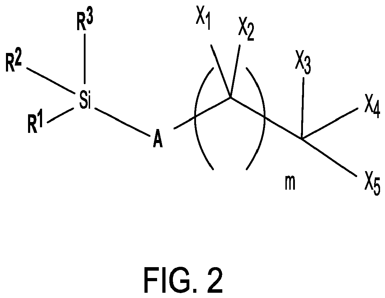

FIG. 2 is a structural formula of a representative pendant group. FIG. 2 shows R groups, A groups, X groups, and m repeats. Pendant groups are described as they are prior to being bonded to the GNP. R¹, R², and R³ are leaving groups. Leaving groups are molecular fragments that easily leave a molecule when a covalent bond is formed. In some embodiments the leaving groups can be weak Lewis bases. Short chain leaving groups may be desirable as they leave more readily, though any leaving group with low steric hindrance can be used. When bonded to a GNP one or more of the leaving groups is replaced by a covalent bond to the GNP at a functional site. In some embodiments, R¹, R², and/or R³ can be alcohols, ethers, non-fluorine halogens, and/or amines. In further embodiments R¹, R², and R³ are ethers. In further embodiments R¹, R², and R³ are ethoxy or methoxy groups. R¹, R², and R³ can be the same or different from each other. In some embodiments R¹, R², and R³ are the same as each other. Having a leaving group as described allows the pendant groups to be easily bonded to the GNPs at the functional sites.

A is a chain of atoms comprising at least one carbon atom. In some embodiments the chain contains a mix of carbon and nitrogen atoms. In further embodiments A is a chain of carbon atoms. The chain of A is unsubstituted. In an unsubstituted chain, all atoms in the chain are bonded either to other members of the chain or to hydrogen. In further embodiments A is an unsubstituted chain of carbon atoms. The chain in A can contain at least 1 and no more than 4 atoms, at least 1 and no more than 3 atoms, or at least 1 and no more than 2 atoms. In some embodiments A is two atoms. In further embodiments A is CH₂CH₂.

The letter m is an integer from 1 to 12, from 2 to 11, or from 3 to 10. In further embodiments m is 5 or 10.. The integer represents the number of repeats of the carbon atom bonded to X₁ and X₂. X₁ and X₂ can be hydrogen, halogens, and alkyls of 1 to 5 carbon atoms. Alkyls of greater than 5 carbons may not be desirable in some applications as larger groups create steric hindrance and disrupt polymer crosslinking. In some embodiments X₁ and/or X₂ can be a halogen, or more specifically fluorine. X₁ and X₂ can be the same or different from each other. In some embodiments X₁ and X₂ are the same as each other. X₁ and X₂ can differ from one carbon in the repeat to the other. For example, if m equals 2, on the first carbon X₁ can be a hydrogen and X₂ can be fluorine, and on the second carbon X₁ can be fluorine and X₂ can be an alkyl. In some embodiments X₁ and X₂ are the same for all carbons in the repeat.

X₃, X₄, and X₅ can be hydrogen or halogens, and at least one of X₃, X₄, and X₅ is fluorine. In some embodiments X₃, X₄, and/or X₅ are halogens. In further embodiments X₃, X₄, and/or X₅ are fluorine. X₃, X₄, and/or X₅ can be the same or different from each other. In some embodiments X₃, X₄, and X₅ are the same as each other. In some embodiments X₃, X₄, and X₅ are fluorine.

As an example, the pendant group of FIG 2 can be 1H, 1H, 2H, 2H-perfluorooctyltriethoxysilane. In 1H, 1H, 2H, 2H-perfluorooctyltriethoxysilane, R¹, R², and R³ are ethoxy groups, A is CH₂CH₂, m equals 5, and X₁, X₂, X₃, X₄, and X₅ are fluorine.

Pendant groups as described herein provide hydrophobic properties to supplement the anticorrosion benefits of GNP alone or in combinations with other anticorrosion inhibitors, such as Al³⁺, Mn²⁺, Mg²⁺, Cr³⁺, MoO₄⁻, silicates, Pr³⁺, Ce³⁺, Y³⁺, La³⁺, Zr²⁺, and Zn²⁺.

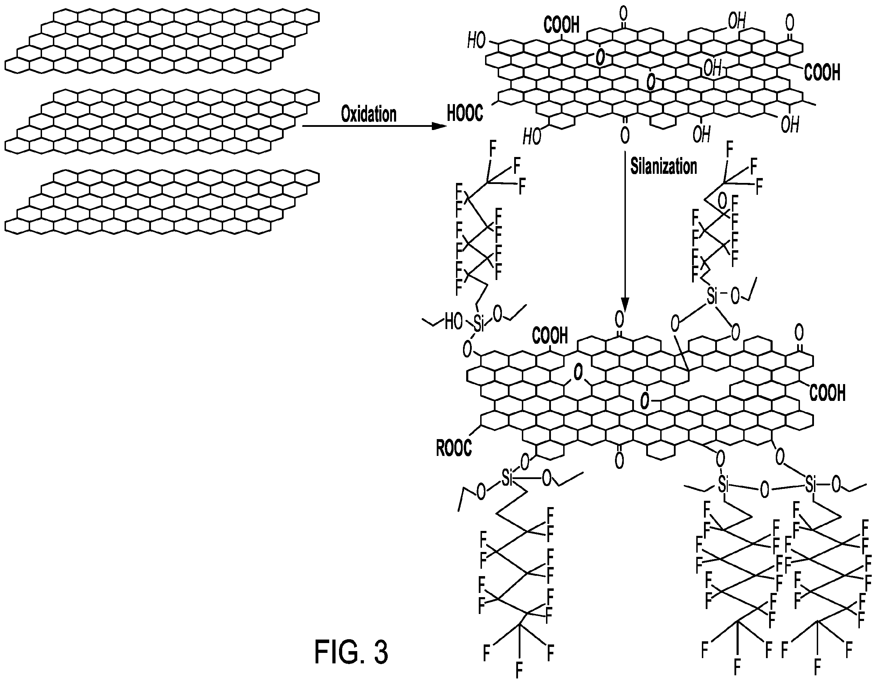

FIG. 3 is a reaction schematic for making a representative silane-GNP. FIG. 3 shows that graphite is exfoliated under oxidative conditions to form graphene oxide nanoplatelets, which can then be reduced or directly silanated depending on the desired amount of surface oxides. Graphene oxide is typically prepared using chemical exfoliation of graphite, but many other methods of forming graphene oxide are known. Chemical reduction of graphene oxide significantly reduces the surface oxides but does not completely eliminate to form pure graphene.

GNPs are then reacted via silanization to form silane functionalized GNPs. The silanization reaction can be conducted by first dispersing GNPs in a solvent. The concentration of GNPs in the solvent can be 10-30 wt % of the reaction. The solvent can be a polar solvent. In some embodiments the solvent can be an alcohol. In further embodiments the solvent can be ethanol. A silane is then added. The silane is a molecule of the pendant group as described above. The silane can be added dropwise. The mixture is then brought to reflux under nitrogen and allowed to react for at least thirty minutes to no more than 24 hours. In some embodiments the mixture is allowed to react for at least 1 hour to no more than 18 hours or at least 4 hours to no more than 12 hours. In some embodiments the temperature of the reaction is in a range of at least 90°C to no more than 120°C, at least 95°C to no more than 115°C, or at least 100°C to no more than 110°C. The resulting product is an additive that is the subject of this application.

The additive can then be filtered. The additive, filtered or unfiltered, is added to a polymeric matrix, for example a primer, to form a doped primer. The primer can be, for example, an epoxy-based primer containing one or more non-chromate corrosion inhibitors. The non-chromate corrosion inhibitor can be compounds containing praseodymium, manganese, silane, aluminum, zinc, lanthanide, cerium, yttrium, magnesium, or a rare earth metal depending on the anti-corrosion needs. In some embodiments the primer is a commercially available primer, for example Deft® 44GN098 water reducible high performance epoxy primer or Hentzen® 16708TEP epoxy primer. Doped primer can be prepared by mixing the perfluorosilane functionalized GNPs into an epoxy-based primer as the primer is compiled from its components. A primer mix typically contains a base component, a catalyst component, and a thinner component. For example, this mixture can be a solvent, pre-polymers that will make a BPA (bisphenol-A-(epichlorhydrin)), rheological modifiers, and pigments. First, perfluorosilane functionalized GNPs is dispersed in the thinner (i.e. water) through sonication, for example, at 20-120 kHz. Next, the base and catalyst components of the primer are added to the resulting solution. Subsequently, the mixture is high shear mixed at, for example, 3000-5000 RPM until homogeneous.

The doped primer can have a total solids concentration in a range of at least 15 to no more than 50 percent by weight, at least 20 to no more than 55 percent by weight, or at least 25 to no more than 40 percent by weight. The concentration of the additive in the doped primer can be in a range of at least 0.1 percent to no more than 2percent by weight of the total solids. In some embodiments the concentration can be at least 0.25 percent to no more than 1.25 percent or at least 0.3 percent to no more than 1.1 percent by weight of the total solids. The doped primer can be applied to the substrate by, for example, spraying, brushing, or immersion/dipping a layer of the primer mixture between 0.0005 inch (0.0127 mm) and 0.002 inch (0.0508 mm) thick.

The substrate can be formed from, for example, aluminum or an aluminum alloy. Alternatively, the substrate can be formed of other metals such as copper, copper alloy, tin, tin alloy, bismuth, bismuth alloy, indium, indium alloy, stainless steel, titanium, nickel, titanium alloy, low alloy steel, or a nickel alloy. The use of a particular metal or alloy can be optimized based on the particular micro-environment to which the component will be exposed. For example, a component within the combustion section of a gas turbine engine can experience very high cyclic temperatures, and a component formed of nickel or a nickel alloy can tolerate better the cyclic high temperatures within the combustion section compared to a component formed of aluminum or an aluminum alloy. In other words, a component within the combustion section formed of nickel or a nickel alloy will crack, warp, or break less frequently or to a lesser degree compared to a component formed of aluminum or an aluminum alloy within the same combustion section.

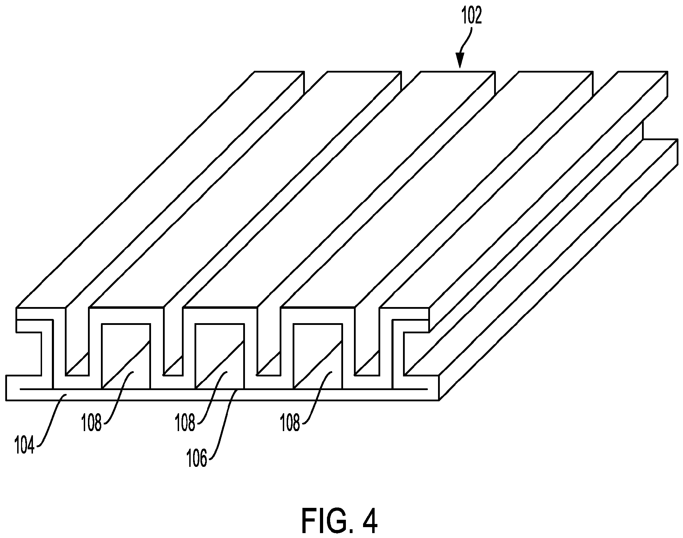

FIG. 4 is a partial cross section of a heat exchanger with a representative coating. FIG. 4 shows a heat exchanger 102 with a coating 104 disposed on the surfaces heat exchanger structures 106. Because coating 104 is hydrophobic, it decreases the amount of water contact time with the heat exchanger structure 106 thereby reducing icing and/or water fouling in the heat exchanger flow paths 108. The decreased water contact time associated with the hydrophobic nature of coating 104 can also lead to decreased corrosion of the heat exchanger structure 106. The doped primer can be used to coat any suitable article, for example heat exchangers, air cycle machines, ducting, galley refrigeration, air conditioning systems, electronic boxes, heat sinks, and automobile parts It can also be used to coat parts in any system in which the parts come in contact with a fluid or gas or are subject to icing or fluid entrapment.

The resulting coating is both anticorrosive and hydrophobic, which increases the longevity of the underlying article and decreases icing issues.

### EXAMPLES

### Example 1 - Synthesis of Perfluorosilane Functionalized GNPs

In Example 1, GNPs are functionalized using perfluorosilanes. GNPs are obtained by exfoliation of graphite using methods well known in the art. Reduction may occur if the surface oxygen content is desired to be lowered. The resulting GNPs are then dissolved in alcohol. Perfluorosilanes are added dropwise at a ratio of 5:1 to 10:1 GNP to perfluorosilane by weight. The resulting mixture is brought to reflux under nitrogen at about 100°C to 105°C overnight. The product can be used in the primer directly without additional processing or purification.

### Example 2 - Water Contact Angle Analysis

In Example 2 the water contact angle of various anticorrosive coatings is determined. An additive is added to a polyurethane topcoat, in this case a fluoropolyurethane known as CA9311 by PPG in a concentration of about 1% by weight of total solids in the primer. Aluminum alloy 2219 substrate is coated with the commercial primer or a doped primer and allowed to cureThe water contact angle is determined using ASTM International standard D7334-08.

Table 1 shows the experimental results of adding functionalized GNPs to a primer, as described herein. As shown in the table, the addition of 3-(glycidyoxypropyl)trimethoxysilanefunctionalized GNP increases the water contact angle from 86° to 96°. A water contact angle of greater than 90° is considered hydrophobic, therefore they addition of silane functionalized GNPs renders the previously hydrophilic coating hydrophobic. Adding 1H, 1H, 2H, 2H-perfluorooctyltriethoxysilane functionalized GNP further increases the water contact angle to 101°, rendering the coating even more hydrophobic.

**Table 1**

| **Sample** | **Primer** | **Additive** | **Water Contact Angle** |
|---|---|---|---|
| 1 | Fluoropolyurethane | None | 78 |
| 2 | Fluoropolyurethane | GNP | 86 |
| 3 | Fluoropolyurethane | Silane functionalize GNP | 96 |
| 4 | Fluoropolyurethane | Perfluorosilane functionalized GNP | 101 |

### Discussion of Possible Embodiments

The following are non-exclusive descriptions of possible embodiments of the present invention.

An additive for reducing corrosion and increasing hydrophobicity, the additive comprising: oxidized graphene nanoplatelets; and a pendanat group represented by the following formula: 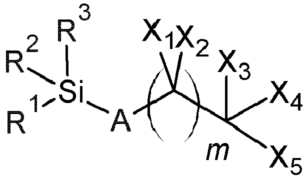 wherein R¹, R², and R³ are selected from a group consisting of alcohols, ethers, halogens, and amines, A is an unsubstituted chain of at least 1 and no more than 4 atoms wherein at least one atom is carbon, m is an integer from 1 to 12, X₁ and X₂ are selected from a group consisting of hydrogen, halogens, and alkyls of 1 to 5 carbon atoms, X₃, X₄, and X₅ are selected from a group consisting of hydrogen and halogens, and at least one of X₃, X₄, and X₅ is fluorine; and wherein at least one of R¹, R², and R³ is covalently bonded to one of the graphene nanoplatelets.

The system of the preceding paragraph can optional include additionally and/ or alternatively any one or more of the following features, configuration and/or additional components:

A further embodiment of the additive wherein at least one of R¹, R², and R³ is an ether.

A further embodiment of the additive wherein A is an unsubstituted carbon chain of at least 1 and no more than 4 carbon atoms.

A further embodiment of the additive wherein m is at least 4 and no greater than 8.

A further embodiment of the additive wherein X₁ and X₂ are fluorine.

A further embodiment of the additive wherein X₃, X₄ and X₅ are fluorine.

A further embodiment of the additive wherein the pendant group is 1H, 1H, 2H, 2H-perfluorooctyltriethoxysilane.

A further embodiment of the additive having a graphene nanoplatelet to pendant group ratio of at least 5:1 and no greater than 10:1 by weight.

A coating for reducing corrosion and increasing hydrophobicity, the coating comprising: a polymer coating, and an additive for reducing corrosion and increasing hydrophobicity, the additive comprising: oxidized graphene nanoplatelets; and a pendanat group represented by the following formula: 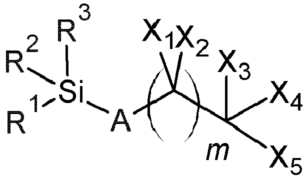 wherein R¹, R², and R³ are selected from a group consisting of alcohols, ethers, halogens, and amines, A is an unsubstituted chain of at least 1 and no more than 4 atoms wherein at least one atom is carbon, m is an integer from 1 to 12, X₁ and X₂ are selected from a group consisting of hydrogen, halogens, and alkyls of 1 to 5 carbon atoms, X₃, X₄, and X₅ are selected from a group consisting of hydrogen and halogens, and at least one of X₃, X₄, and X₅ is fluorine; and wherein at least one of R¹, R², and R³ is covalently bonded to one of the graphene nanoplatelets.

The coating of the preceding paragraph can optional include additionally and/ or alternatively any one or more of the following features, configuration and/or additional components:

A further embodiment of the coating wherein the primer is an epoxy-based primer.

A further embodiment of the coating wherein the pendant group is 1H, 1H, 2H, 2H-perfluorooctyltriethoxysilane.

A further embodiment of the coating having an additive concentration in the primer of at least 0.1% and no greater than 2 % by weight.

A further embodiment of the coating wherein the coating has a water contact angle of at least 100 degrees and no greater than 110 degrees.

A method for making a hydrophobic corrosion resistant coating, the method comprising: oxidizing graphene nanoplatelets to form oxidized graphene nanoplatelets, forming a mixture by mixing the oxidized graphene nanoplatelets with a pendant group represented by the following formula: 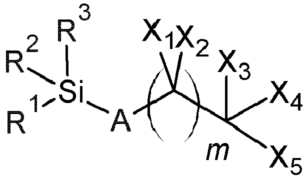 wherein R¹, R², and R³ are selected from a group consisting of alcohols, ethers, halogens, and amines, A is a substituted or unsubstituted carbon chain of at least 1 and no more than 4 atoms, m is an integer from 1 to 12, X₁ and X₂ are selected from a group consisting of hydrogen, halogens, and alkyls of 1 to 5 carbon atoms, X₃, X₄, and X₅ are selected from a group consisting of hydrogen and halogens, and at least of X₃, X₄, and X₅ is fluorine; heating the mixture at least 1 hour and no more than 24 hours to form an additive; and mixing the additive into a primer to form the coating.

The method of the preceding paragraph can optional include additionally and/ or alternatively any one or more of the following features, configuration and/or additional components:

A further embodiment of the method wherein the mixture is formed in a solvent.

A further embodiment of the method further comprising filtering the additive.

A further embodiment of the method wherein the primer is an epoxy based primer to form a coating.

A further embodiment of the method wherein the coating contains 25% to 40% solids by weight and wherein 0.1% to 1.25% of the solids are the additive.

A further embodiment of the method further comprising applying the coating to a substrate and curing the coating at a temperature of at least 30°C for at least 36 hour.

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope thereof. Therefore, it is intended that the invention not be limited to the particular embodiment(s) disclosed, but that the invention will include all embodiments falling within the scope of the appended claims.

## Claims

1. An additive for reducing corrosion and increasing hydrophobicity, the additive comprising:
oxidized graphene nanoplatelets; and
a pendant group represented by the following formula: 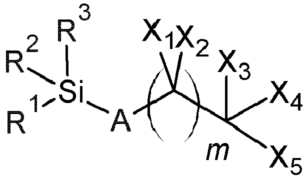
wherein R¹, R², and R³ are selected from a group consisting of alcohols, ethers, halogens, and amines, A is an unsubstituted chain of at least 1 and no more than 4 atoms wherein at least one atom is carbon, m is an integer from 1 to 12, X₁ and X₂ are selected from a group consisting of hydrogen, halogens, and alkyls of 1 to 5 carbon atoms, X₃, X₄, and X₅ are selected from a group consisting of hydrogen and halogens, and at least one of X₃, X₄, and X₅ is fluorine; and
wherein at least one of R¹, R², and R³ is covalently bonded to one of the graphene nanoplatelets.

2. The additive of claim 1, wherein at least one of R¹, R², and R³ is an ether.

3. The additive of claim 1 or 2, wherein A is an unsubstituted carbon chain of at least 1 and no more than 4 carbon atoms.

4. The additive of any preceding claim, wherein m is at least 4 and no greater than 8.

5. The additive of any preceding claim, wherein X₁ and X₂ are fluorine, and/or wherein X₃, X₄ and X₅ are fluorine.

6. The additive of any preceding claim, wherein the pendant group is 1H, 1H, 2H, 2H-perfluorooctyltriethoxysilane.

7. The additive of any preceding claim, having a graphene nanoplatelet to pendant group ratio of at least 5:1 and no greater than 10:1 by weight.

8. A coating for reducing corrosion and increasing hydrophobicity, the coating comprising:
a polymer coating, and
the additive of any preceding claim dispersed in the primer.

9. The coating of claim 8, having an additive concentration in the primer of at least 0.1% and no greater than 2 % by weight.

10. The coating of claim 8 or 9, wherein the coating has a water contact angle of at least 100 degrees and no greater than 110 degrees.

11. A method for making a hydrophobic corrosion resistant coating as claimed in claims 8 to 10, the method comprising:
oxidizing graphene nanoplatelets to form oxidized graphene nanoplatelets,
forming a mixture by mixing the oxidized graphene nanoplatelets with the pendant group represented by the following formula: 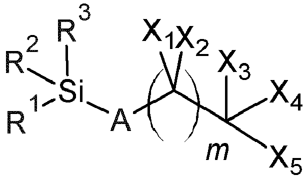
wherein R¹, R², and R³ are selected from a group consisting of alcohols, ethers, halogens, and amines, A is a substituted or unsubstituted carbon chain of at least 1 and no more than 4 atoms, m is an integer from 1 to 12, X₁ and X₂ are selected from a group consisting of hydrogen, halogens, and alkyls of 1 to 5 carbon atoms, X₃, X₄, and X₅ are selected from a group consisting of hydrogen and halogens, and at least of X₃, X₄, and X₅ is fluorine;
heating the mixture at least 1 hour and no more than 24 hours to form the additive; and
mixing the additive into the primer to form the coating.

12. The method of claim 11, wherein the mixture is formed in a solvent.

13. The method of claim 11 or 12, further comprising filtering the additive.

14. The method of claim 13, wherein the coating contains 25% to 40% solids by weight and wherein 0.1% to 1.25% of the solids are the additive.

15. The method of claim 13 or 14, further comprising applying the coating to a substrate and curing the coating at a temperature of at least 30°C for at least 36 hours.
